# EUROPÄISCHE PATENTSCHRIFT

(11) **EP 0 806 339 B1**
(45) Veröffentlichungstag und Bekanntmachung des Hinweises auf die Patenterteilung: **04.04.2001**
(21) Anmeldenummer: 97810283.8
(22) Anmeldetag: 06.05.1997
(51) Int. Cl.: B62H 3/00, B62H 3/08

(54) **Verfahren und Vorrichtung zur sicheren Befestigung von Fahrrädern insbesondere bei deren Transport**
Method and arrangement for locking bicycles, in particular during transport
Procédé et dispositif pour bloquer des bicyclettes, notamment pendant le transport

(30) Priorität: 06.05.1996 CH 114296
(43) Veröffentlichungstag der Anmeldung: 12.11.1997
(73) Patentinhaber: ZBINDEN, Hugo, CH-1725 Posieux (CH)
(72) Erfinder: Ressnig, Rudolf, 4564 Obergerlafingen (CH); Schmied, Beat, 4563 Gerlafingen (CH); Hertig, Christof, 3435 Ramsei (CH)
(74) Vertreter: BOVARD AG - Patentanwälte

(56) Entgegenhaltungen:
- EP-A- 0 147 384
- BE-A- 1 008 333
- CH-A- 668 400
- DE-A- 4 314 368
- US-A- 4 452 384

## Beschreibung

Die Erfindung betrifft ein Verfahren und eine Vorrichtung zur sicheren Befestigung von Fahrrädern, insbesondere bei deren Transport mit Motorfahrzeugen oder Anhängern aller Art. Sie kann aber auch als zuverlässige Diebstahlsicherung bei abgestellten Fahrrädern eingesetzt werden.

Die Fahrräder werden heutzutage mit den unterschiedlichsten Vorrichtungen auf und an Motorfahrzeugen, aber auch auf Anhängern befestigt. Bei den weitaus häufigsten Anwendungen werden die Fahrräder an einer Stelle ihres Rahmens mit einer mechanischen Vorrichtung fixiert (z.B. in EP-A-0 147 384). Mit der Entwicklung von immer exklusiveren Fahrrädern verunmöglicht die Vielfalt der Rahmen- und deren Querschnittformen die Verwendung einer einheitlichen Haltevorrichtung. Ferner werden die immer dünneren Wandungen der Rahmenrohre auch empfindlicher auf jede Art von Klemmkräften.

Eine ebenfalls häufige Methode ist die Befestigung der Fahrräder mit Bändern, Gurten oder Riemen. Diese eher zeitaufwendige Art erfordert vom Anwender vielfach auch einige Kenntnisse wie und wo die Riemen angebracht werden müssen.

Die Aufgabe bestand somit darin, eine Transportvorrichtung zu entwickeln, welche die ganze Vielfalt von Fahrrädern zuverlässig und ohne Anpass- oder Umrüstarbeiten aufnehmen kann. Ferner war verlangt, dass die Vorrichtung ohne Vorkenntnisse von jedem Anwender sehr rasch und sicher bedient werden kann.

Die Aufgabe konnte mit dem in den Patentansprüchen beschriebenen Verfahren und den davon abgeleiteten Vorrichtungen gelöst werden. Der Lösungsansatz beruht auf der Tatsache, dass jedes Fahrrad zwei Pedale (4a) und zwei äusserst stabile Tretkurbeln (4b) aufweist. Im folgenden werden diese Elemente auch als aktiver Tretmechanismus (4) bezeichnet. Wird letzterer beidseitig auf eine geeignete Auflage gelegt und blockiert, erübrigt sich, ausser einer einfachen Führung der beiden Räder, jede weitere Fixierung des Fahrrades.

Die verschiedenen Abmessungen und Modelle der Fahrräder ergeben nur geringfügige Unterschiede in der Grösse des aktiven Tretmechanismus (4) und in der Lage von dessen Drehpunkt (4c). Die anhand der Zeichnungen beschriebene Erfindung nutzt diese Vorteile für eine einfache und sichere praktische Anwendung. Es zeigen:
- Fig. 1: Prinzip der Befestigung in schematischer Darstellung bei einer schrägen oder sogar vertikalen Einbaulage des Fahrrades
- Fig. 2: Prinzip der Befestigung in schematischer Darstellung bei einer horizontalen oder nahezu horizontalen Einbaulage des Fahrrades
- Fig. 3: Ausführungsbeispiel zur Befestigung in nahezu vertikaler Einbaulage
- Fig. 4: Ausführungsvariante zu Fig. 3

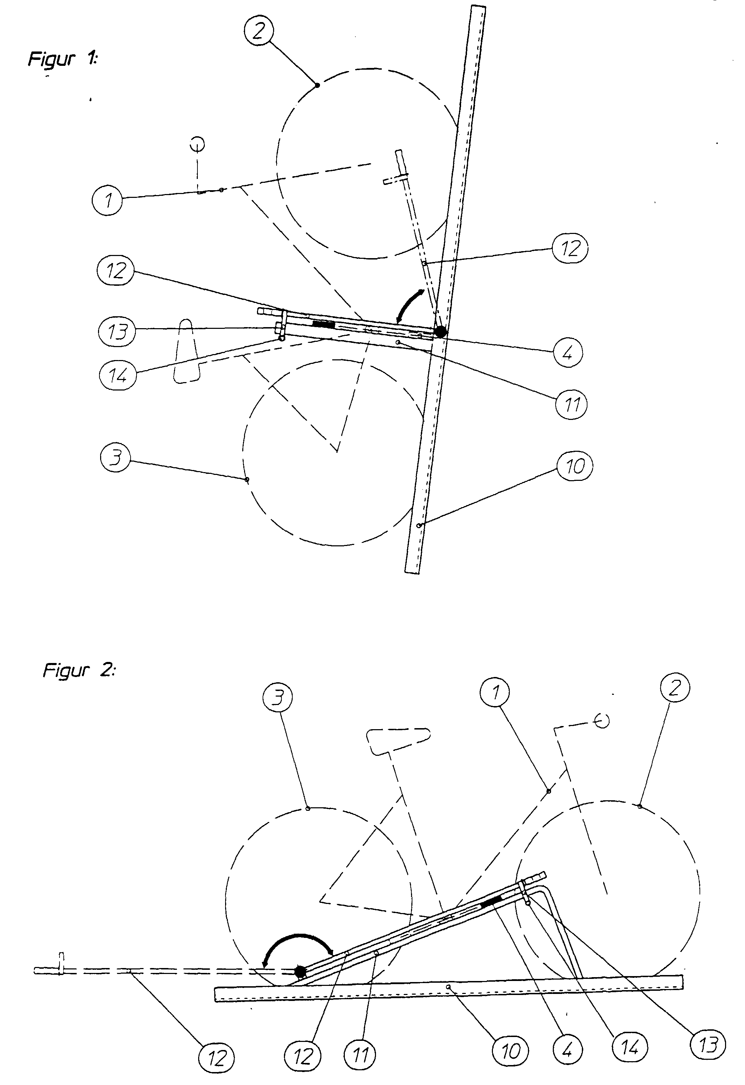

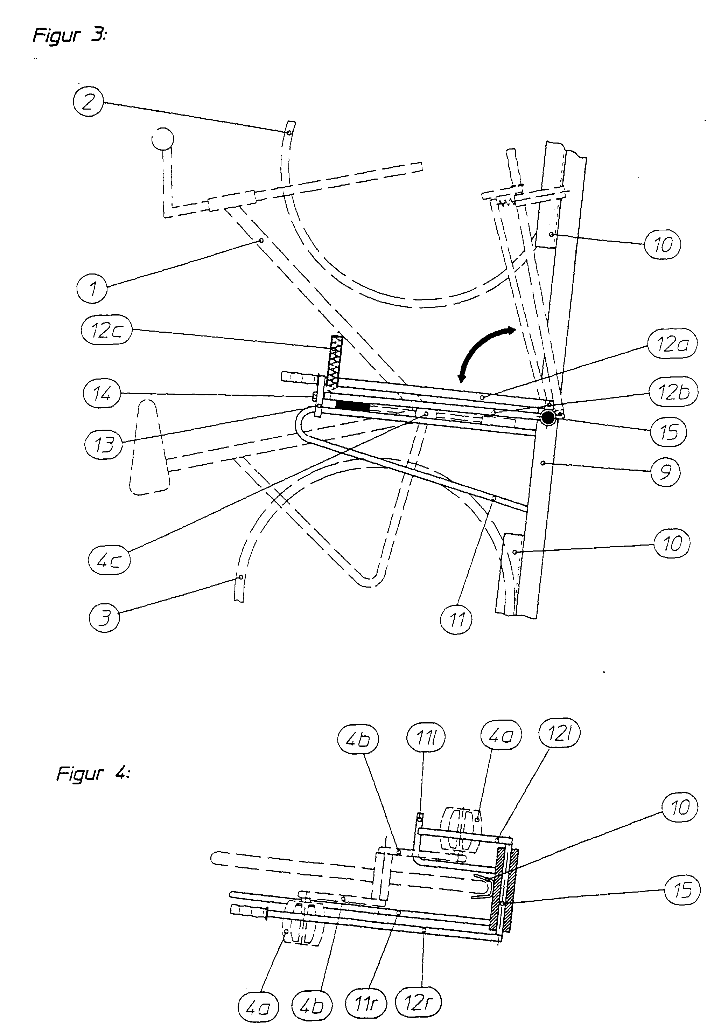

Fig. 1 zeigt schematisch die prinzipielle Befestigungsmethode, für den Fall, dass das Fahrrad (1) schräg oder sogar vertikal transportiert wird. Vor dem Anhängen des Fahrrades wird die Klemmvorrichtung (12) in ihre Offenstellung geschwenkt. Das Fahrrad wird nun vom Benutzer angehoben und mit dem aktiven Tretmechanismus (4) beidseitig auf den Auflageträger (11) gelegt. Beide Räder (2) und (3) liegen in der - für die Erfindung nicht weiter interessierenden - Führung (10). Bereits jetzt hat der Anwender beide Hände für die weiteren Handgriffe frei. Mit dem Schliessen der schwenkbaren Klemmvorrichtung (12) wird der aktive Tretmechanismus (4) beidseitig geklemmt. Die Verriegelung (13) verhindert insbesondere bei starken Erschütterungen - wie sie beim Transport auftreten können - das ungewollte Öffnen. Mit dem in Fig. 3 als Beispiel gezeigten Sicherheitsschloss (14) kann das Fahrrad gegen Diebstahl geschützt werden.

Fig. 2 zeigt schematisch die prinzipielle Befestigungsmethode, für den Fall, dass das Fahrrad horizontal oder nahezu horizontal transportiert wird. Das Fahrrad (1) steht auf seinen beiden Rädern (2) und (3) in einer - für die Erfindung nicht weiter interessierenden - Führung (10). Seitlich von dieser Führung ist beidseitig der schräge Auflageträger (11) angeordnet. Das Fahrrad wird so hingestellt, dass sein aktiver Tretmechanismus (4) beidseitig am Auflageträger (11) anliegt. Mit dem Schliessen der Klemmvorrichtung (12) wird der aktive Tretmechanismus (4) des Fahrrades beidseitig geklemmt. Die Verriegelung (13) verhindert das ungewollte Öffnen während dem Transport. Wie für Fig. 1 beschrieben, kann das Fahrrad mit einem Sicherheitsschloss (14) gegen Diebstahl geschützt werden.

Fig. 3 zeigt ein Ausführungsbeispiel, bei welchem das Fahrrad (1) nahezu vertikal aufgehängt und befestigt wird. Das Fahrrad liegt mit beiden Rädern (2) und (3) in einer Führung (10). Der aktive Tretmechanismus (4) liegt mit den Pedalen (4a) und/oder den Tretkurbeln (4b) beidseitig auf den zwei nebeneinander angeordneten Auflageträgern (11). Die Klemmvorrichtung (12), die Verriegelung (13) und sofern verwendet das Sicherheitsschloss (14) sind in diesem Ausführungsbeispiel links und rechts des Fahrrades in gleicher Ausführung vorhanden. An dieser Stelle wird deshalb nur noch die in Fig. 3 vorne liegende Seite beschrieben. Die im Drehpunkt (15) gelagerte schwenkbare Klemmvorrichtung (12) besteht aus dem starren Teil (12a) und dem beweglichen Teil (12b). Der starre Teil (12a) wird mit der Verriegelung (13) am Auflageträger (11) eingehängt und gesichert. Der bewegliche Teil (12b) gibt mittels der Feder (12c) die erforderliche Vorspannung auf den Tretmechanismus (4), so dass das Fahrrad auch bei Erschütterungen aller Art spielfrei und sicher gehalten ist. Mit dem Sicherheitsschloss (14) kann die Klemmvorrichtung gegen unbefugtes Öffnen gesichert und somit das Fahrrad vor Diebstahl geschützt werden.

Fig. 4 zeigt eine Ausführungsvariante zu Figur 3, mit dem Unterschied, dass die Schwenkbewegung der einen Seite der Klemmvorrichtung (121) mit der anderen Seite (12r) starr gekoppelt ist. Die Verriegelung (13) und die Sicherung gegen Diebstahl mit einem Sicherheitsschloss (14) sind dadurch nur noch auf einer Seite erforderlich. In diesem gezeigten Beispiel ist die linke Seite des Auflageträgers (111) und der Klemmvorrichtung (121) kürzer ausgeführt als die rechten Seiten (11r) und (12r). In diesem Fall muss der Benutzer zwar beim Auf- oder Einlegen des Fahrrades auf die richtige Orientierung des Tretmechanismus (4) achten, dafür ist aber das Einfahren an sich einfacher, da es auch seitlich erfolgen kann.

## Patentansprüche

1. Verfahren zur sicheren Befestigung von Fahrrädern, insbesondere für deren Transport, dadurch gekennzeichnet, dass das Fahrrad an seinen beiden Pedalen (4a) oder an seinen beiden Tretkurbeln (4b) gehalten und fixiert wird.

2. Verfahren nach Anspruch 1, dadurch gekennzeichnet, dass die Pedalen (4a) und die Tretkurbeln (4b) kombiniert zum Halten oder Fixieren verwendet werden.

3. Verfahren nach den Ansprüchen 1 - 2, dadurch gekennzeichnet, dass diese prinzipielle Art der Halterung auch bei stationären Anwendungen für die mechanische Sicherung z.B. gegen Diebstahl verwendet wird.

4. Vorrichtung zur Anwendung des Verfahrens nach mindestens einem der Ansprüche 1 - 3, dadurch gekennzeichnet, dass für die Auflage der Pedalen (4a) oder der Tretkurbeln (4b) ein geeigneter Auflageträger (11) und eine bewegliche Klemmvorrichtung (12) verwendet wird und dass mindestens ein Teil der Klemmvorrichtung gefedert ist, um die unterschiedlichen Grössen und Formen des Tretmechanismus zu überbrücken.

5. Vorrichtung nach Anspruch 4, dadurch gekennzeichnet, dass die unterschiedlichen Grössen und Formen des Tretmechanismus nicht mit einer Federung, sondern mit einer Spindel oder einer anderen Schraubbewegung überbrückt werden.

6. Vorrichtung nach mindestens einem der Ansprüche 4 - 5, dadurch gekennzeichnet, dass der Auflageträger (11) im unbenutzten Zustand - im Interesse des geringeren Platzbedarfes oder des kleineren Luftwiderstandes - zusammengelegt werden kann.

## Claims

1. Method for secure fastening of bicycles, in particular for their transport, characterised in that the bicycle is held and fixed at its two pedals (4a) or at its two pedal cranks (4b).

2. Method according to claim 1, characterised in that the pedals (4a) and the pedal cranks (4b) are used in combination for holding or fixing.

3. Method according to claims 1 - 2, characterised in that this principle type of mounting is used also in stationary applications for mechanical securing, e.g. against theft.

4. Device for application of the method according to at least one of the claims 1 - 3, characterised in that a suitable support bracket (11) and a movable clamping device (12) is used for support of the pedals (4a) or the pedal cranks (4b), and in that at least one part of the clamping device is spring mounted in order to span the different sizes and shapes of the pedalling mechanism.

5. Device according to claim 4, characterised in that the different sizes and shapes of the pedalling mechanism are not spanned by means of a spring system, but instead by means of a spindle or another screw movement.

6. Device according to at least one of the claims 4 - 5, characterised in that the support bracket (11) in an unused state can be folded up - in the interest of less space requirements or of less air resistance.

## Revendications

1. Procédé de fixation sûre de bicyclettes, en particulier en vue de leur transport, caractérisé en ce que chaque bicyclette est maintenue et immobilisée par ses deux pédales (4a) ou par ses deux manivelles (4b).

2. Procédé selon la première revendication, caractérisé en ce que les pédales (4a) et les manivelles (4b) sont utilisées de façon combinée pour le maintien ou l'immobilisation de la bicyclette.

3. Procédé selon les revendications 1 et 2, caractérisé en ce que le principe de cette fixation est employé aussi pour des utilisations fixes aux fins de protection, par exemple contre le vol.

4. Dispositif d'application du procédé selon l'une au moins des revendications 1 à 3, caractérisé en ce que, pour l'appui des pédales (4a) ou des manivelles (4b), on utilise un support d'appui (11) approprié et un dispositif mobile de blocage (12) et en ce qu'au moins une partie du dispositif de blocage est élastique afin qu'elle compense les différences de taille et de formes du mécanisme de pédalage.

5. Dispositif selon la revendication 4, caractérisé en ce que les différences de taille et de formes du mécanisme de pédalage ne sont pas compensées par un montage élastique mais par une broche filetée ou par un autre mouvement hélicoïdal.

6. Dispositif selon l'une au moins des revendications 4 et 5, caractérisé en ce que, quand il n'est pas utilisé, le support d'appui (11) peut être replié afin d'obtenir un moinde encombrement ou une réduction de la résistance de l'air.
